# EUROPÄISCHE PATENTSCHRIFT

(11) **EP 4 080 296 B1**
(45) Veröffentlichungstag und Bekanntmachung des Hinweises auf die Patenterteilung: **19.04.2023**
(21) Anmeldenummer: 21169903.8
(22) Anmeldetag: 22.04.2021
(51) Int. Cl.: G05B 19/042

(54) **VERFAHREN ZUM DURCHFÜHREN EINER SICHEREN KONFIGURATIONSAKTUALISIERUNG EINES ELEKTRONISCHEN GERÄTS**
METHOD FOR SECURELY UPDATING THE CONFIGURATION OF AN ELECTRONIC DEVICE
PROCÉDÉ PERMETTANT DE METTRE EN OEUVRE UNE MISE À JOUR SÉCURISÉE DE LA CONFIGURATION D'UN APPAREIL ÉLECTRONIQUE

(43) Veröffentlichungstag der Anmeldung: 26.10.2022
(73) Patentinhaber: SICK AG, 79183 Waldkirch (DE)
(72) Erfinder: Fecher, Dr. Harald, 79111 Freiburg (DE); Ziegenmeyer, Dr. Marco, 79238 Ehrenkirchen (DE); Thilo, Kerscher, 79183 Waldkirch (DE)

(56) Entgegenhaltungen:
- WO-A1-2008/145290
- WO-A1-2017/210240

## Beschreibung

Die Erfindung betrifft ein Verfahren zum Durchführen einer sicheren Konfigurationsaktualisierung eines elektronischen Geräts gemäß dem Anspruch 1.

In der heutigen Industrie wird der Automatisierungsgrad immer stärker vorangetrieben, so dass mit mehr Einsatz von elektronischen Geräten, wie beispielsweise Steuerungen, Sensoren oder Aktoren, zukünftig zu rechnen ist. Hierbei werden die elektronischen Geräte jeweils mit einer Firmware ausgestattet, die Gerätefunktionen des elektronischen Geräts bereitstellt.

Die Gerätefunktionen der Firmware können Anwendungsfunktionen und Sicherheitsfunktionen des elektronischen Geräts umfassen, wobei typischerweise die Anwendungsfunktionen von einem Anwender des elektronischen Geräts und die Sicherheitsfunktionen des elektronischen Geräts von einem autorisierten Sicherheitsbeauftragten bearbeitet bzw. konfiguriert werden. In diesem Zusammenhang kann die Gerätefunktion beispielsweise eine "Konfiguration über einen Webserver" oder eine "Konfiguration über USB-Anschluss" umfassen, wobei solch eine Konfigurationsart des Geräts, wie beispielsweise bereits von Computersoftwareupdates oder Updates von mobilen Telekommunikationsgeräten bekannt, sicherheitsrelevante Aspekte des Geräts beeinflussen kann.

Die Konfiguration der Anwendungsfunktionen und die Konfiguration der Sicherheitsfunktionen können vom Zeitpunkt her unabhängig voneinander erstellt werden. Hierbei ist es gefordert, dass die Konfiguration der Anwendungsfunktionen keinen Einfluss auf die Konfiguration der Sicherheitsfunktionen haben darf.

Ferner ist es auch wünschenswert, dass ein Austausch eines Gerätes einer Anlage, die durch eine Vernetzung von elektronischen Geräten gebildet ist, ebenfalls keinen Einfluss auf die Konfiguration der Sicherheitsfunktionen der vernetzten Geräte durch das neue Austauschgerät, insbesondere durch dessen Firmware, haben darf.

Es ist auch gängige Praxis, dass zu einem späteren Zeitpunkt als der Herstellungszeitpunkt der Firmware des Geräts Sicherheitslücken in den Sicherheitsfunktionen des Geräts entdeckt werden, sodass eine Verwendung eines bereits produzierten bzw. ausgelieferten Geräts mit den nichtsicheren Gerätefunktionen ein Sicherheitsrisiko darstellt. In dem Falle, dass das Gerät eine veraltete Firmware und damit nichtsichere Gerätefunktionen aufweist, ist es notwendig, dass eine Aktualisierung der Firmware auf dem Gerät durchgeführt werden muss, wobei solch eine Aktualisierung der Firmware eine aufwendige Firmware-Aktualisierung erfordert, die möglicherweise zusätzlich auch noch von einem autorisierten Sicherheitsbeauftragten auszuführen ist.

Die Entwicklung solch einer Firmware-Aktualisierung ist zeit- und kostenintensiv, wobei die Ausführung der Firmware-Aktualisierung durch einen autorisierten Sicherheitsbeauftragten zusätzliche Kosten erfordert.

Hierdurch ist der Anwender teilweise gezwungen, entweder die Sicherheitslücken der Sicherheitsfunktionen des verwendeten Geräts in Kauf zu nehmen oder hohe Kosten zu investieren, um zu gewährleisten, dass die Konfiguration des verwendeten Geräts immer einer aktuellen Sicherheitsanforderung genügt.

Bei einem Geräteaustausch in einer Anlage ergibt sich zusätzlich die Problematik, dass entweder das neue Austauschgerät mit seinen sicheren Gerätefunktionen nicht in vollem Umfang verwendet werden kann oder die Anlage zu einem Stillstand gezwungen wird, weil die Sicherheitsfunktionen des Austauschgeräts einen Widerspruch zu der Konfiguration der Anwendungsfunktionen der "alten" Geräte der Anlage erkennen.

Es ist auch möglich, dass ein aus einem Lager entnommenes älteres Austauschgerät die in der neuen Firmware enthaltenen Sicherheitsfunktionen nicht erkennt, so dass das ältere Austauschgerät nicht in Betrieb geht, wodurch die Anlage zu einem Stopp gezwungen wird. Bei diesem Beispiel ist die Anlage nur dadurch wieder in Betrieb zu nehmen, indem ein autorisierter Sicherheitsbeauftragter die sicherheitsbezogenen Gerätefunktionen des älteren Austauschgeräts, falls überhaupt möglich, mit den neuen Sicherheitsfunktionen überschreibt oder der Anwender die Anlage mit der nichtsicheren Sicherheitsanforderung des älteren Austauschgeräts wieder in Betrieb nimmt, wobei er gezwungen ist, eine aufwendige Sicherheitsdokumentation zu erstellen.

Aus WO 2008/145290 A1 ist ein Verfahren zum Parametrieren von Betriebsmitteln, wie zum Beispiel von Feldgeräten einer Automatisierungsanlage, bekannt. Gemäß dem bekannten Verfahren wird für wenigstens einige der angeschalteten Betriebsmittel jeweils eine Gerätebeschreibung in einer zentralen Einrichtung hinterlegt, wobei jede Gerätebeschreibung wenigstens eine Funktion und den dazugehörenden Parametersatz enthält. Darüber hinaus wird eine Liste von mehreren vorbestimmten Gerätefunktionen gespeichert, denen jeweils der entsprechende Parametersatz der Betriebsmittel zugeordnet wird, welche die Gerätefunktion unterstützten. Wird eine Gerätefunktion ausgewählt, so wird unter Ansprechen auf die ausgewählte Gerätefunktion wenigstens ein Betriebsmittels parametriert, welches diese Gerätefunktion unterstützt.

Es ist eine Aufgabe der vorliegenden Erfindung, ein Verfahren zum Durchführen einer sicheren Konfigurationsaktualisierung eines elektronischen Geräts zur Verfügung zu stellen, das einen Weiterbetrieb des elektronischen Geräts nach der Konfigurationsaktualisierung gewährleistet.

Die Aufgabe wird erfindungsgemäß durch ein Verfahren zum Durchführen einer sicheren Konfigurationsaktualisierung eines elektronischen Geräts mit den Merkmalen des Anspruchs 1 gelöst.

Das heißt, das erfindungsgemäße Verfahren umfasst die Schritte:
- Bereitstellen eines Konfigurationsaktualisierungsprogramms, enthaltend die Schritte:
   i) Auswählen zumindest einer Gerätefunktion für das Gerät, die ein Bestandteil der Konfigurationsaktualisierung des Geräts bildet,
   ii) Zuweisen einer ersten Ausführungsvorschrift zu der Gerätefunktion, wobei die erste Ausführungsvorschrift eine erste Gerätefunktionseigenschaft einstellt, wenn die ausgewählte Gerätefunktion auf dem Gerät vorhanden ist,
   iii) Zuweisen einer zweiten Ausführungsvorschrift zu einer Fallback-Funktion, wobei die zweite Ausführungsvorschrift vorzugsweise ein Freigeben der Konfigurationsaktualisierung, ein Ignorieren einer nicht durchführbaren Konfigurationsaktualisierung, ein Stoppen des Geräts oder Anpassungen von Gerätefunktionen umfasst, wenn die Fallback-Funktion auf dem Gerät ausgeführt wird,
- Ablaufen des Konfigurationsaktualisierungsprogramms auf dem Gerät und Durchführen folgender Schritte:
   a) Prüfen, ob die in Schritt i) ausgewählte Gerätefunktion und die in Schritt ii) zugewiesene Ausführungsvorschrift vom Gerät unterstützt werden, oder ob die in Schritt ii) zugewiesene Ausführungsvorschrift vom Gerät unterstützt wird,
   b) Speichern der ersten Ausführungsvorschrift als Konfigurationsaktualisierung in das Gerät, wenn die gewählte Gerätefunktion und die zugewiesene erste Ausführungsvorschrift vom Gerät unterstützt werden, oder wenn die zugewiesene erste Ausführungsvorschrift von Gerät unterstützt wird,
      oder
   c) Ausführen der Fallback-Funktion, wenn die gewählte Gerätefunktion unterstützt und die zugewiesene erste Ausführungsvorschrift vom Gerät nicht unterstützt werden, oder die zugewiesene erste Ausführungsvorschrift vom Gerät unterstützt wird, so dass die zweite Ausführungsvorschrift ausgeführt wird.

Hieraus ergibt sich der technische Vorteil, dass die Konfigurationsaktualisierung an dem Gerät durchgeführt und umgesetzt wird, unabhängig davon, ob das Gerät die zu aktualisierende Gerätefunktion hat oder nicht erkennt. Zusätzlich ist ein Weiterbetrieb des Geräts nach der Konfigurationsaktualisierung durch die eingestellte mögliche Fallback-Funktion gewährleistet, so dass eine betriebliche Verfügbarkeit des aktualisierten Geräts bzw. einer Anlage mit dem aktualisierten Gerät erhöht ist.

Die Konfigurationsaktualisierung kann außerdem eine verbesserte Sicherheit gewährleisten, da insbesondere die Durchführung der Schritte i) bis iii) eine vorherige Sicherheitsberechtigungsfreigabe erfordert.

In diesem Zusammenhang und insbesondere bei dem im Folgenden beschrieben Ausführungsbeispiel bedeutet "sicher" bzw. "Sicherheit" im Sinne eines Schutzes gegen einem von außen auf die Konfiguration des Geräts zugreifenden Angriff, wie beispielsweise eines Hackerangriffes, bei dem die Konfiguration des Geräts unautorisiert und in einer vom Anwender nicht gewollten Art und Weise verändert werden soll.

Bei der Übernahme der Konfigurationsaktualisierung in das Gerät wird vorzugsweise, aber nicht zwingend eine Bestätigung vom Anwender erfragt, wobei das für die Bestätigung anzugebene Passwort in dem Konfigurationsaktualisierungsprogramm und/oder in dem Gerät hinterlegt sein kann, so dass eine Überprüfung einer Übereinstimmung der Passwörter mit der Bestätigung ausgeführt werden kann. Bei der Übernahme bzw. für die Bestätigung muss der Anwender entsprechend autorisiert sein. Hierdurch ist eine Vorort-Präsenz des autorisierten Sicherheitsbeauftragten nicht immer erforderlich, was vorteilhaft ist, da das Bereitstellen des Konfigurationsaktualisierungsprogramms ortsunabhängig von dem Ablauf des Konfigurationsaktualisierungsprogramms sein kann.

Vorteilhafterweise erfordert die Durchführung der Schritte a) bis c) keine Sicherheitsberechtigungsfreigabe, so dass die Vorort-Präsenz des autorisierten Sicherheitsbeauftragten erst recht nicht notwendig ist.

Gemäß einem bevorzugten Ausführungsbeispiel wird der Gerätefunktion eine Identifikationsnummer zugeordnet, anhand derer im Schritt a) verifiziert wird, ob das Gerät die Gerätefunktion unterstützt oder nicht. Hierdurch ist es sichergestellt, dass die zu aktualisierende Gerätefunktion auch dem dafür vorgesehenen Gerät richtig zugeordnet wird bzw. das zu aktualisierende Gerät die zu aktualisierende Gerätefunktion sicher korrekt erkennt. Vorzugsweise wird ein Typenschlüssel des Geräts bei einer Erstellung der Identifikationsnummer der Gerätefunktion mitberücksichtigt, wodurch eine zweifelsfreie Zuordnung der Gerätefunktion zu dem Gerät ausgeführt werden kann. Hierdurch kann die Konfigurationsaktualisierung vorteilhafterweise auf einem aktuellen oder zukünftigen Gerät oder auch auf einem älteren Bestandgerät, beispielsweise ein aus einem Lager zum Tausch genommenes Geräts, angewendet werden.

Vorteilhafterweise wird zumindest ein zu erwartetes Verhalten des Geräts und/oder aller relevanten Geräte aufgrund der zugewiesenen ersten und/oder zweiten Ausführungsvorschrift grafisch angezeigt, so dass der Anwender bereits beim Bereitstellen des Konfigurationsaktualisierungsprogramms ein mögliches Ergebnis auf dem Gerät ersehen kann und auf diese Weise unterschiedliche Ausführungsvorschriften simulieren kann.

Weiterhin werden der Fallback-Funktion gemäß einem bevorzugten Ausführungsbeispiel mehrere zweite Ausführungsvorschriften zugewiesen, die nacheinander oder alternativ zueinander ausgeführt werden. Hierdurch ergibt sich insbesondere in Verbindung mit einer Verifizierung mittels der Identifikationsnummer und des Typenschlüssels, inklusive Version der Konfiguration usw., der technische Vorteil, dass das Konfigurationsaktualisierungsprogramm auf dem aktuellen oder zukünftigen Gerät oder auch auf dem Bestandgerät sicher ausgeführt werden kann.

Die zweiten Ausführungsvorschriften der Fallback-Funktion ermöglicht hierbei eine schrittweise Anpassung des Konfigurationsaktualisierungsprogramms an dem zu aktualisierenden Gerät. Insbesondere werden die zweiten Ausführungsvorschriften in Verbindung mit einem sicheren Betrieb des Geräts unterschiedlich priorisiert und entsprechend ihrer Priorisierung ausgeführt.

Vorzugsweise wird gemäß einem weiteren bevorzugten Ausführungsbeispiel die Ausführung der Schritte i) bis iii) und a) bis c) mittels einer Anzeige grafisch angezeigt. Der Anwender erhält dadurch einen hohen Handlungsfreiraum, das Konfigurationsaktualisierungsprogramm nach seinen Wünschen anzupassen, und eine klare Übersicht über den Status der Konfigurationsaktualisierung seines Geräts.

Es ist ferner eine Aufgabe der Erfindung, ein Programm bzw. ein Konfigurationstool zur Verfügung zu stellen, das einen Weiterbetrieb eines elektronischen Geräts nach einer Konfigurationsaktualisierung gewährleistet.

Die Aufgabe wird erfindungsgemäß durch ein Programm zum Ausführen eines Verfahrens gemäß einem der Ansprüche 1 bis 8 gelöst, wobei das Programm auf einem programmierbaren Speicher gespeichert und durch einen Anwender ausführbar ist. Vorteilhafterweise ist ein Interpreter auf dem Speicher gespeichert, wobei der Interpreter vorgesehen ist, um das Programm auszuführen.

Weiterhin wird die Aufgabe erfindungsgemäß durch ein Konfigurationstool mit einem Speicher gelöst, auf dem ein Programm nach Anspruch 11 gespeichert ist.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an dem unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. In der Zeichnung zeigt:

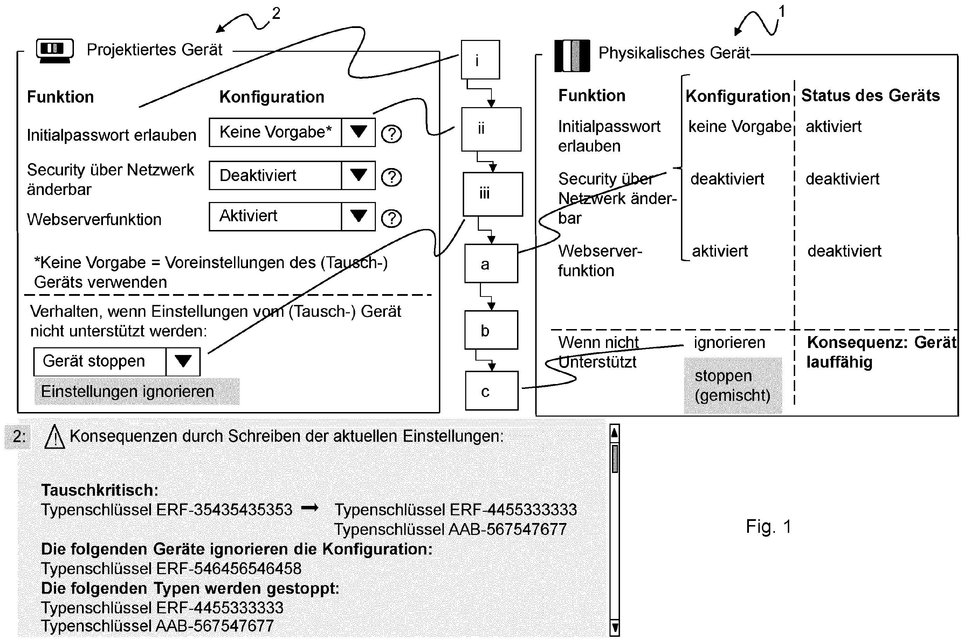

- Fig. 1: eine schematische Darstellung einer grafischen Abbildung eines Ablaufs eines bevorzugten Ausführungsbeispiels des erfindungsgemäßen Verfahrens.

In Figur 1 ist eine grafische Abbildung eines Ablaufs eines bevorzugten Ausführungsbeispiels des erfindungsgemäßen Verfahrens schematisch dargestellt. Eine Konfigurationsaktualisierung wird hierbei für ein elektronisches Austauschgerät 1 durchgeführt, das als "Physikalisches Gerät" bezeichnet und auf der rechten Seite der Figur 1 grafisch dargestellt ist. Das physikalische Gerät 1 kann eine Steuerung, einen Sensor oder einen programmgesteuerten Aktor umfassen.

Nach einem Start des erfindungsgemäßen Verfahrens wird einem Anwender eine Bereitstellung eines Konfigurationsaktualisierungsprogramms 2 als ein neues Projekt in einer grafischen Oberfläche angezeigt, wobei das Verfahren auf einem nicht dargestellten Computer oder einem nicht dargestellten mobilen elektronischen Gerät ausgeführt werden kann. Das neue Projekt kann als "Projektiertes Gerät" bezeichnet werden.

In der grafischen Oberfläche wird in einem Schritt i) ein Auswählen von drei Gerätefunktionen durchgeführt, wobei die Gerätefunktionen in einer hinterlegten Datenbibliothek vordefiniert und von dort ausgewählt werden können. Die ausgewählten Gerätefunktionen bilden ein Bestandteil der Konfigurationsaktualisierung.

Bei dem dargestellten Ausführungsbeispiel bestehen die drei Gerätefunktionen aus "Initialpasswort erlauben", "Security über Netzwerk änderbar", und "Webserverfunktion". Hierbei kann die erste Gerätefunktion "Initialpasswort erlauben" dem Anwender ermöglichen, ein bereits vorhandenes Passwort zu bestätigen oder ein neues Passwort zu vergeben, mit dem ein Zugriff auf die Funktionen des zu konfigurierenden Geräts 1 erfolgen kann.

Hierbei ist es vorteilhaft, wenn das Passwort in der Konfigurationsaktualisierung hinterlegt ist, so dass durch einen Vergleich auf Übereinstimmung der Anwender das Passwort durch die Bestätigung übernehmen kann, wenn eine Übereinstimmung gegeben ist. Hierfür braucht der Anwender vorteilhafterweise kein autorisierter Sicherheitsbeauftragter sein. Der Anwender kann aber auch ein neues Passwort vergeben, wenn - wie bei dem gezeigten Ausführungsbeispiel "Keine Vorgabe*" - kein Passwort vorgegeben sein sollte oder wenn sich keine Übereinstimmung aus dem Vergleich ergeben sollte.

Die zweite Gerätefunktion "Security über Netzwerk änderbar" kann eine Änderung einer Sicherheitseinstellung des Geräts 1 über ein Netzwerk ermöglichen, an dem das Gerät 1 angeschlossen ist. Dies hat Vorteile bzgl. einer Nutzungserleichterung des Geräts 1, aber auch Nachteile beispielsweise bzgl. einem Sicherheitsaspekt betreffend eine Zugriffbeschränkung auf das Gerät 1.

Sicherheitsaspekt bedeutet in diesem Zusammenhang, dass mit einer Aktivierung der zweiten Gerätefunktion ein ungewollter Zugriff auf die Konfiguration des Geräts 1 durch beispielweise einen Hackerangriff aus dem Netzwerk möglich wäre, so dass es wünschenswert bzw. ratsam ist, dass die zweite Gerätefunktion nur aktiviert sein soll, wenn bei der ersten Gerätefunktion ein Passwort vorgegeben ist.

Bei dem gezeigten Ausführungsbeispiel ist bei der ersten Gerätefunktion kein Passwort vergeben, daher ist es vom Sicherheitsaspekt her auch folgerichtig, dass die zweite Gerätefunktion deaktiviert ist.

Die dritte dargestellte Gerätefunktion "Webserverfunktion" stellt generell eine Zugriffmöglichkeit auf das Gerät 1 mittels eines Browsers dar. Das heißt, bei Aktivierung der dritten Gerätefunktion kann der Anwender mit dem Browser direkt auf das Gerät 1 zugreifen, so dass er beispielsweise eine Diagnose durchführen oder die Konfiguration des Geräts 1 ändern bzw. aktualisieren kann.

Das heißt mit anderen Worten, bei dem dargestellten Ausführungsbeispiel kann das Gerät 1 bisher nur über einen USB-Anschluss konfiguriert werden, da die zweite Gerätefunktion "Security über Netzwerk änderbar" deaktiviert ist, wodurch das Gerät 1 vor einem Zugriff aus einem Netzwerk heraus geschützt ist. Mit der Auswahl der "Webserverfunktion" und der zugewiesenen "Aktivierung" könnte auf das Gerät 1 mittels eines Browsers von einem Netzwerk aus zugegriffen, aber nicht konfiguriert werden.

Nach dem Schritt i) folgt ein Schritt ii), in dem ein Zuweisen einer ersten Ausführungsvorschrift zu der jeweiligen Gerätefunktion durchgeführt wird. Hierbei stellt die erste Ausführungsvorschrift, in diesem Beispiel als "Keine Vorgabe*", "Deaktiviert" und "Aktiviert" definiert, eine erste Gerätefunktionseigenschaft ein, wenn die ausgewählte Gerätefunktion auf dem Gerät 1 vorhanden bzw. voreingestellt ist.

Erfindungsgemäß ist eine Fallback-Funktion vorgesehen, der in einem Schritt iii) einer zweiten Ausführungsvorschrift zugewiesen wird. Die Fallback-Funktion ist eine Bedingung, die eine definierte Gerätefunktionseigenschaft des Geräts 1 auslöst, wenn die Fallback-Funktion auf dem Gerät 1 ausgeführt wird. Hierbei kann die zweite Ausführungsvorschrift ein Freigeben der Konfigurationsaktualisierung, ein Ignorieren einer nicht durchführbaren Konfigurationsaktualisierung, ein Stoppen des Geräts 1 oder Anpassungen von Gerätefunktionen umfassen. Es können jedoch auch andere Maßnahmen als zweite Ausführungsvorschrift denkbar sein, die an dieser Stelle nicht abschließen erwähnt sind.

In diesem Zusammenhang bedeutet die Anpassung von Gerätefunktionen, dass beispielsweise eine Möglichkeit vorgesehen werden kann, eine vom Gerät 1 nicht unterstützte Gerätefunktion nachträglich durch Ausführen der Fallback-Funktion auf dem Gerät 1 zu implementieren, so dass das Gerät 1 teilweise die Konfigurationsaktualisierung übernehmen kann und diese nicht vollständig ablehnt.

Das heißt, es können Geräte 1 vorhanden sein, die beispielsweise:
a) die dritte Gerätefunktion "Webserverfunktion" (nicht dargestellt) nicht aufweisen,
b) die dritte Gerätefunktion "Webserverfunktion" unterstützen und diese Gerätefunktion unveränderlich deaktiviert haben (wie bei dem ausgewählten Ausführungsbeispiel auf der rechten Seite der Figur 1 dargestellt),
c) die dritte Gerätefunktion "Webserverfunktion" unterstützen und diese Gerätefunktion mit einem Initialwert "aktiviert" eingestellt haben (nicht dargestellt), oder
d) die dritte Gerätefunktion "Webserverfunktion" unterstützen und diese Gerätefunktion mit einem Initialwert "deaktiviert" eingestellt haben (nicht dargestellt).

Wird das bereitgestellte Konfigurationsaktualisierungsprogramm 2 auf das Gerät 1 angewendet, würde bei einem Gerät 1 gemäß dem Beispiel a) entweder über die Konfigurationsaktualisierung die dritte Gerätefunktion neu auf das Gerät 1 implementiert werden oder über die Konfigurationsaktualisierung die Fallback-Funktion ausgelöst werden. Trotzdem wird die Konfigurationsaktualisierung erfolgreich abgeschlossen, da die ausgewählte dritte Gerätefunktion und die zugewiesene erste Ausführungsvorschrift durch das Gerät 1 übernommen werden kann bzw. - wie in der Figur 1 dargestellt - die zweite Ausführungsvorschrift der Fallback-Funktion als "ignorieren" eingestellt ist.

Bei einem Gerät 1 gemäß dem Beispiel b) würde die Fallback-Funktion aktiviert werden, da die ausgewählten Gerätefunktionen unterstützt werden, aber die der dritten Gerätefunktion zugewiesenen ersten Ausführungsvorschrift "Aktiviert" nicht übereinstimmt. Trotzdem würde die Konfigurationsaktualisierung erfolgreich abgeschlossen werden, da die zweite Ausführungsvorschrift der Fallback-Funktion als "ignorieren" eingestellt ist.

Bei einem Gerät 1 gemäß dem Beispiel c) würde die Konfigurationsaktualisierung auf das Gerät 1 gespeichert werden, da die ausgewählten Gerätefunktionen unterstützt und die zugewiesenen Gerätefunktionen übereinstimmend eingestellt sind.

Bei einem Gerät 1 gemäß dem Beispiel d) würde die voreingestellte Ausführungsvorschrift "deaktiviert" entsprechend der bereitgestellten ersten Ausführungsvorschrift der Konfigurationsaktualisierung auf "Aktiviert" eingestellt werden, so dass die Konfigurationsaktualisierung auf das Gerät 1 gespeichert werden kann.

Es können sich noch weitere Kombinationsmöglichkeiten bzgl. der Gerätefunktionseigenschaften des Geräts 1 ergeben, die sich von den erwähnten Beispielen a) bis d) unterscheiden. Es ist jedoch möglich mit dem erfindungsgemäßen Verfahren ein Konfigurationsaktualisierungsprogramm 2 bereitzustellen und auf dem Gerät 1 erfolgreich ablaufen zu lassen.

Somit kann insbesondere mit Hilfe der Fallback-Funktion eine Konfigurationsaktualisierung durch das erfindungsgemäße Verfahren auch auf ein Gerät 1 ausgeführt werden, bei dem beispielsweise die dargestellte Konfigurationsaktualisierung auf der rechten Seite der Figur 1 nicht vorgesehen war oder ist.

Bei dem gezeigten Ausführungsbeispiel wird das erfindungsgemäße Verfahren auf ein Gerät 1 (rechte Seite der Figur 1) angewendet, das als Austauschgerät genommen wurde und vor allem der dritten Gerätefunktion "Webserverfunktion" ein Initialwert "deaktiviert" zugewiesen ist.

In der Figur 1 ist bei dem Ausführungsbeispiel dargestellt, dass der zweiten Ausführungsvorschrift der Fallback-Funktion zwei alternativen Gerätefunktionseigenschaften, nämlich "Gerät stoppen" und "Einstellungen ignorieren" (in der Figur 1 grau untermalt), zugewiesen werden können, so dass sich daraus zwei unterschiedliche Verhalten des Geräts 1 ableiten können.

Auf das oben beschriebene Bereitstellen des Konfigurationsaktualisierungsprogramms 2 folgt ein Ablauf des Konfigurationsaktualisierungsprogramms 2 auf dem Gerät 1 ab. Hierbei führt das Konfigurationsaktualisierungsprogramm 2 in einem Schritt a) eine Überprüfung durch, ob die in Schritt i) ausgewählten drei Gerätefunktionen und die in Schritt ii) zugewiesenen ersten Ausführungsvorschriften vom Gerät 1 unterstützt werden, oder ob die in Schritt ii) zugewiesenen ersten Ausführungsvorschriften vom Gerät 1 unterstützt wird.

Wie auf der rechten Seite der Figur 1 in dem Gerät 1 dargestellt, stellt das Konfigurationsaktualisierungsprogramm 2 bei dem Gerät 1 fest, dass die erste und zweite Gerätefunktion auf dem Gerät 1 entsprechend dem Konfigurationsaktualisierungsprogramm 2 konfiguriert sind. Die Gerätefunktionen sind vorhanden und die entsprechenden ersten Ausführungsvorschriften sind jeweils zugewiesen.

Bei der dritten Gerätefunktion stellt das Konfigurationsaktualisierungsprogramm 2 fest, dass ein Initialwert unveränderlich "deaktiviert" ist.

Das Verfahren stellt somit eine Abweichung zwischen der bereitgestellten Konfigurationsaktualisierung und der bestehenden Gerätefunktionseigenschaft des Geräts 1 fest. Das Konfigurationsaktualisierungsprogramm 2 führt daher einen Schritt c) durch, bei dem die Fallback-Funktion ausgeführt wird, da der ausgewählten dritten Gerätefunktion "Webserverfunktion" vom Gerät 1 die Ausführungsvorschrift "Aktiviert" nicht zugewiesen werden kann.

Im Falle einer Zuweisung der zweiten Ausführungsvorschrift "Gerät stoppen" zu der Fallback-Funktion, würde das Gerät 1 somit von dem Konfigurationsaktualisierungsprogramm 2 gestoppt werden.

Sollte der Fallback-Funktion jedoch die zweite Ausführungsvorschrift "Einstellungen ignorieren" zugewiesen sein, beispielweise weil diese Gerätefunktion keine hohe Wichtigkeit bzw. keine Sicherheitsrelevanz hat oder weil dem Anwender die Lauffähigkeit des Geräts 1 insbesondere im Tauschfall wichtiger als das Einhalten der konfigurierten Gerätefunktion ist, dann kann das Gerät 1 die Konfigurationsaktualisierung annehmen und weiterhin in Betrieb bleiben.

Es besteht auch die Möglichkeit, der zweiten Ausführungsvorschrift der Fallback-Funktion eine Installation der konfigurierbaren dritten Gerätefunktion zu zuweisen, beispielsweise mittels eines Aktivierungscodes für die dritte Gerätefunktion, so dass die dritte Gerätefunktion und der entsprechenden Ausführungsvorschrift in das Gerät 1 übernommen werden.

Vorzugsweise ist der Gerätefunktion eine Identifikationsnummer und dem Gerät 1 einen Typenschlüssel zugeordnet, wobei die Identifikationsnummer und der Typenschlüssel in der Datenbibliothek hinterlegt sein können.

Hierdurch ist es vorteilhaft, im Schritt i) eine Auswahl der auszuwählenden Gerätefunktionen anzupassen, da die Typenschlüssel, inklusive die Version des Geräts 1, und die Identifikationsnummer für die Konfiguration bekannt sind, so dass nur für dieses Gerät 1 und seine potentiellen Tauschgeräte unterstützte Gerätefunktionen auswählbar und einstellbar sind.

Zusätzlich kann durch die Hinterlegung der Typenschlüssel und der Identifikationsnummer in der Datenbibliothek das Konfigurationsaktualisierungsprogramm 2 nach den Schritten i) bis iii) bereits ein zu erwartetes Verhalten des Geräts 1 mit dem entsprechenden Typenschlüssel bzw. der entsprechenden Identifikationsnummer ableiten, ohne dass das Konfigurationsaktualisierungsprogramm 2 auf dem tatsächlich zu konfigurierenden Gerät 1 abgelaufen ist. Hierdurch kann insbesondere eine Auswahl eines kompatiblen Austauschgeräts für den Anwender erleichtert werden.

Weiterhin kann das zu erwartete Verhalten des Geräts 1 als Reaktion auf die ausgewählten Gerätefunktionen und auf die zugewiesenen Ausführungsvorschriften grafisch dem Anwender angezeigt werden, so dass der Anwender visuell erkennen kann, wie sich die verschiedenen Geräte 1 auf die bereitgestellte Konfigurationsaktualisierung verhalten werden.

Mit der Verifizierung mittels der Identifikationsnummer und dem Typenschlüssel ist es vorteilhafterweise möglich, mehrere zweite Ausführungsvorschriften der Fallback-Funktion zu zuweisen. Hierbei werden die zweiten Ausführungsvorschriften vorzugsweise in Verbindung mit einem sicheren Betrieb des Geräts unterschiedlich priorisiert und entsprechend ihrer Priorisierung ausgeführt.

Bezogen auf das dargestellte Ausführungsbeispiel der Figur 1 bedeutet dies, dass der Fallback-Funktion nicht nur die alternativen zweiten Ausführungsvorschriften "Gerät stoppen" und "Einstellungen ignorieren" zugewiesen werden, sondern auch eine Fallunterscheidung möglich ist, dass die zweite Ausführungsvorschrift "Gerät stoppen" ausgeführt werden muss, wenn das Gerät 1 entsprechende kritische Typenschlüsseln aufweist, oder die zweite Ausführungsvorschrift "Einstellungen ignorieren" ausgeführt wird, wenn das Gerät 1 entsprechende nicht-kritische Typenschlüsseln aufweist.

Kritischer bzw. nicht-kritischer Typenschlüssel bedeutet, dass das Gerät 1 mit dem entsprechenden Typenschlüssel beispielweise sehr wichtig für einen Betrieb der Anlage mit dem Gerät 1 bzw. weniger wichtig sein kann.

In Verbindung mit der unterschiedlichen Priorisierung können beispielweise der ersten Gerätefunktion "Initialpasswort erlauben", die nicht kritisch ist, die Ausführungsvorschrift "Einstellungen ignorieren" und der dritten Gerätefunktion "Webserverfunktion", die kritischer als die erste Gerätefunktion ist, die Ausführungsvorschrift "Gerät stoppen" zugewiesen werden. Durch diese unterschiedlichen Priorisierungen wird das Gerät 1 nicht gestoppt, solange die Einstellung der dritten Gerätefunktion "Webserverfunktion" erfüllt ist, auch wenn die Einstellung der ersten Gerätefunktion "Initialpasswort erlauben" nicht erfüllt sein sollte. Dadurch wird vorzugsweise eine erhöhte Verfügbarkeit des Geräts 1 gegenüber einer reduzierten Sicherheit erzielt.

Die oben erwähnten Maßnahmen des Konfigurationsaktualisierungsprogramms 2 stellen sicher, dass eine Konfigurationsaktualisierung auch für Geräte 1, die keine entsprechenden Funktionen für eine Neukonfiguration bzw. einen Austausch aufweisen, sicher durchgeführt werden kann, so dass die Geräte 1 nach der Konfigurationsaktualisierung zuverlässig und sicher betrieben werden können.

Wie in der Figur 1 dargestellt, ist es vorteilhaft, dass die Ausführung der Schritte i) bis iii) und a) bis c) mittels einer Anzeige dem Anwender grafisch angezeigt wird, so dass auch ein nicht geübter Anwender den Ablauf des Konfigurationsaktualisierungsprogramms 2 einfach und sicher nachvollziehen kann.

## Patentansprüche

1. Verfahren zum Durchführen einer sicheren Konfigurationsaktualisierung eines elektronischen Geräts (1), umfassend die Schritte:
- Bereitstellen eines Konfigurationsaktualisierungsprogramms (2), enthaltend die Schritte:
i) Auswählen zumindest einer Gerätefunktion für das Gerät (1), die ein Bestandteil der Konfigurationsaktualisierung des Geräts (1) bildet,
ii) Zuweisen einer ersten Ausführungsvorschrift zu der Gerätefunktion, wobei die erste Ausführungsvorschrift eine erste Gerätefunktionseigenschaft einstellt, wenn die ausgewählte Gerätefunktion auf dem Gerät (1) vorhanden ist,
iii) Zuweisen einer zweiten Ausführungsvorschrift zu einer Fallback-Funktion, wobei die zweite Ausführungsvorschrift ein Freigeben der Konfigurationsaktualisierung, ein Ignorieren einer nicht durchführbaren Konfigurationsaktualisierung, ein Stoppen des Geräts (1) oder Anpassungen von Gerätefunktionen umfasst, wenn die Fallback-Funktion auf dem Gerät (1) ausgeführt wird,
- Ablaufen des Konfigurationsaktualisierungsprogramms (2) auf dem Gerät (1) und Durchführen folgender Schritte:
a) Prüfen, ob die in Schritt i) ausgewählte Gerätefunktion und die in Schritt ii) zugewiesene erste Ausführungsvorschrift vom Gerät (1) unterstützt werden, oder ob die in Schritt ii) zugewiesene erste Ausführungsvorschrift vom Gerät (1) unterstützt wird,
b) Speichern der ersten Ausführungsvorschrift als Konfigurationsaktualisierung in das Gerät (1), wenn die gewählte Gerätefunktion und die zugewiesene erste Ausführungsvorschrift vom Gerät (1) unterstützt werden, oder wenn die zugewiesene erste Ausführungsvorschrift vom Gerät (1) unterstützt wird,
oder
c) Ausführen der Fallback-Funktion, wenn die gewählte Gerätefunktion unterstützt und die zugewiesene erste Ausführungsvorschrift vom Gerät (1) nicht unterstützt wird oder wenn die zugewiesene erste Ausführungsvorschrift vom Gerät (1) nicht unterstützt wird, so dass die zweite Ausführungsvorschrift ausgeführt wird.

2. Verfahren nach Anspruch 1, wobei die Durchführung der Schritte i) bis iii) eine vorherige Sicherheitsberechtigungsfreigabe erfordert.

3. Verfahren nach Anspruch 1 oder 2, wobei die Durchführung der Schritte a) bis c) keine Sicherheitsberechtigungsfreigabe erfordert.

4. Verfahren nach einem der vorhergehenden Ansprüche, wobei der Gerätefunktion eine Identifikationsnummer zugeordnet wird, anhand derer im Schritt a) verifiziert wird, ob das Gerät (1) die Gerätefunktion unterstützt oder nicht.

5. Verfahren nach Anspruch 4, wobei ein Typenschlüssel des Geräts (1) bei einer Erstellung der Identifikationsnummer der Gerätefunktion mitberücksichtigt wird.

6. Verfahren nach einem der vorhergehenden Ansprüche, wobei zumindest ein zu erwartetes Verhalten des Geräts (1) und/oder aller relevanten Geräte aufgrund der zugewiesenen ersten und/oder zweiten Ausführungsvorschrift grafisch angezeigt wird.

7. Verfahren nach einem der vorhergehenden Ansprüche, wobei der Fallback-Funktion mehrere zweite Ausführungsvorschriften zugewiesen werden, die nacheinander oder alternativ zueinander ausgeführt werden.

8. Verfahren nach Anspruch 7, wobei die zweiten Ausführungsvorschriften in Verbindung mit einem sicheren Betrieb des Geräts (1) unterschiedlich priorisiert und entsprechend ihrer Priorisierung ausgeführt werden.

9. Verfahren nach einem der vorhergehenden Ansprüche, wobei für jede Gerätefunktion eine individuelle zweite Ausführungsvorschrift der Fallback-Funktion zugewiesen wird.

10. Verfahren nach einem der vorhergehenden Ansprüche, wobei die Ausführung der Schritte i) bis iii) und a) bis c) mittels einer Anzeige grafisch angezeigt wird.

11. Programm zum Ausführen eines Verfahrens gemäß einem der Ansprüche 1 bis 10, wobei das Programm auf einem programmierbaren Speicher gespeichert und durch einen Anwender ausführbar ist.

12. Programm nach Anspruch 11, wobei ein auf dem Speicher gespeicherter Interpreter zum Ausführen des Programms vorgesehen ist.

13. Konfigurationstool mit einem Speicher, auf dem ein Programm nach Anspruch 11 gespeichert ist.

## Claims

1. A method for performing a safe configuration update of an electronic device (1), comprising the steps of:
- Providing a configuration update program (2), comprising the steps of:
i) selecting at least one device function for the device (1) that forms part of the configuration update of the device (1),
ii) assigning a first execution rule to the device function, wherein the first execution rule sets a first device function property if the selected device function is present on the device (1),
iii) assigning a second execution rule to a fallback function, wherein the second execution rule comprises enabling the configuration update, ignoring an infeasible configuration update, stopping the device (1), or adjustments to device functions when the fallback function is executed on the device (1),
- Run the configuration update program (2) on the device (1) and perform the following steps:
a) check whether the device function selected in step i) and the first execution rule assigned in step ii) are supported by the device (1), or whether the first execution rule assigned in step ii) is supported by the device (1),
b) saving the first execution rule as a configuration update to the device (1) if the selected device function and the assigned first execution rule are supported by the device (1), or if the assigned first execution rule is supported by the device (1),
or
c) execute the fallback function if the selected device function is supported and the assigned first execution rule is not supported by the device (1), or if the assigned first execution rule is not supported by the device (1) so that the second execution rule is executed.

2. A method of claim 1, wherein performing steps i) through iii) requires prior safety authorization clearance.

3. A method of claim 1 or 2, wherein performing steps a) through c) does not require a safety authorization clearance.

4. A method according to one of the preceding claims, wherein an identification number is assigned to the device function, which identification number is used in step a) to verify whether or not the device (1) supports the device function.

5. A method according to claim 4, wherein a type code of the device (1) is taken into account in a creation of the identification number of the device function.

6. A method according to one of the preceding claims, wherein at least a behavior to be expected of the device (1) and/or of all relevant devices is graphically displayed based on the assigned first and/or second execution rule.

7. A method according to one of the preceding claims, wherein a plurality of second execution rules is assigned to the fallback function, the second execution rules are executed sequentially or alternatively to each other.

8. A method of claim 7, wherein the second execution rules are prioritized differently in connection with a safe operation of the device (1) and executed according to their prioritization.

9. A method according to one of the preceding claims, wherein an individual second execution rule of the fallback function is assigned for each device function.

10. A method according to one of the preceding claims, wherein the execution of steps i) to iii) and a) to c) is indicated graphically by means of a display.

11. A program for executing a method according to one of the preceding claims 1 to 10, wherein the program is stored on a programmable memory and is executable by a user.

12. A program of claim 11, wherein an interpreter stored on the memory is provided for executing the program.

13. A configuration tool having a memory on which a program according to claim 11 is stored.

## Revendications

1. Procédé pour réaliser une mise à jour de configuration sécurisée d'un dispositif électronique (1), comprenant les étapes:
- Fournir un programme de mise à jour de la configuration (2), comprenant les étapes:
i) sélectionner au moins une fonction de dispositif pour le dispositif (1) qui fait partie de la mise à jour de la configuration du dispositif (1),
ii) affecter une première règle d'exécution à la fonction de dispositif, dans laquelle la première règle d'exécution définit une première caractéristique fonctionnelle du dispositif si la fonction de dispositif sélectionnée est présente sur le dispositif (1),
iii) l'attribution d'une deuxième règle d'exécution à une fonction de repli, dans laquelle la deuxième règle d'exécution comprend l'activation de la mise à jour de configuration, l'ignorance d'une mise à jour de configuration infaisable, l'arrêt du dispositif (1), ou des ajustements des fonctions du dispositif lorsque la fonction de repli est exécutée sur le dispositif (1),
- faire exécuter du programme de mise à jour de la configuration (2) sur le dispositif (1) et effectuez les étapes suivantes:
a) vérifier si la fonction de dispositif sélectionnée à l'étape i) et la première règle d'exécution attribuée à l'étape ii) sont supportées par le dispositif (1), ou si la première règle d'exécution attribuée à l'étape ii) est supportée par le dispositif (1),
b) sauvegarder la première règle d'exécution en tant que mise à jour de la configuration du dispositif (1) si la fonction de dispositif sélectionnée et la première règle d'exécution attribuée sont supportées par le dispositif (1), ou si la première règle d'exécution attribuée est supportée par le dispositif (1),
ou
c) exécuter la fonction de repli si la fonction de dispositif sélectionnée est supportée et la première règle d'exécution attribuée n'est pas supportée par le dispositif (1), ou si la première règle d'exécution attribuée n'est pas supportée par le dispositif (1) de sorte que la deuxième règle d'exécution est exécutée.

2. Procédé selon la revendication 1, dans lequel la réalisation des étapes i) à iii) nécessite une autorisation préalable de sécurité.

3. Procédé selon la revendication 1 ou 2, dans lequel la réalisation des étapes a) à c) ne nécessite pas une autorisation de sécurité.

4. Procédé selon l'une des revendications précédentes, dans lequel un numéro d'identification est attribué à la fonction du dispositif, ce qui permet de vérifier à l'étape a) si le dispositif (1) supporte la fonction du dispositif ou non.

5. Procédé selon la revendication 4, dans lequel un code de type du dispositif (1) est pris en compte dans une création du numéro d'identification de la fonction du dispositif.

6. Procédé selon l'une des revendications précédentes, dans lequel au moins un comportement attendu du dispositif (1) et/ou de tous les dispositifs pertinents est affiché graphiquement sur la base de la première et/ou de la deuxième règle d'exécution attribuée.

7. Procédé selon l'une des revendications précédentes, dans lequel plusieurs deuxièmes règles d'exécution sont attribuées à la fonction de repli, lesquelles sont exécutées successivement ou alternativement les unes aux autres.

8. Procédé selon la revendication 7, dans lequel les deuxièmes règles d'exécution sont classées par priorité de manière différente en relation avec un fonctionnement sûr du dispositif (1) et sont exécutées en fonction de leur classement par priorité.

9. Procédé selon l'une des revendications précédentes, dans lequel une deuxième règle d'exécution individuelle de la fonction de repli est attribuée pour chaque fonction du dispositif.

10. Procédé selon l'une des revendications précédentes, dans lequel l'exécution des étapes i) à iii) et a) à c) est affiché graphiquement au moyen d'un affichage.

11. Programme d'exécution d'un procédé selon l'une des revendications 1 à 10, dans lequel le programme est stocké sur une mémoire programmable et est exécutable par un utilisateur.

12. Programme selon la revendication 11, dans lequel un interpréteur stocké sur la mémoire est prévu pour exécuter le programme.

13. Outil de configuration comprenant une mémoire sur lequel un programme selon la revendication 11 est stocké.
